# EUROPEAN PATENT SPECIFICATION

(11) **EP 1 572 431 B1**
(45) Date of publication and mention of the grant of the patent: **09.08.2006**
(21) Application number: 02791836.6
(22) Date of filing: 16.12.2002
(51) Int. Cl.: B29C 43/22

(54) **PROCESS FOR MANUFACTURING FOILS FOR COATINGS**
VERFAHREN ZUR HERSTELLUNG VON FOLIEN FÜR BESCHICHTUNGEN
PROCEDE DE FABRICATION DE FEUILLES DESTINEES A DES REVETEMENTS

(43) Date of publication of application: 14.09.2005
(73) Proprietor: Isosport Verbundbauteile Gesellschaft m.b.H., 7000 Eisenstadt (AT)
(72) Inventor: WINKLER, Herwig, A-9020 Klagenfurt (AT)
(74) Representative: Hofinger, Engelbert
(86) International application number: PCT/EP2002/014341
(87) International publication number: WO 2004/054776

(56) References cited:
- EP-A- 0 467 323
- EP-A- 0 721 021
- EP-A- 0 875 349
- EP-A- 0 917 944
- US-A- 5 578 373

## Description

The invention involves a process for manufacturing foils for coatings from high and ultra-high molecular polyethylene, polypropylene and/or poly(vinylidene difluoride), especially for ski and snowboard bases and bearing surfaces, but also for other applications.

Ultra-high molecular polyethylene (UHMW-PE), polypropylene and/or poly(vinylidene difluoride) cannot be processed to a smooth foil with normal extruder devices. Therefore, blocks are usually initially sintered over a period of several hours and at high energy input, following which foils are peeled off them. These foils' surfaces are abraded or sandblasted and scarfed for further processing to e.g. ski linings. Over the several hours of the process of sintering to form blocks, and depending on the type and quality of the colour and the additives, segregations occur which result in uneven colouring and uneven properties of the foils. In addition, only a limited number of colours and additives can be used in the block-sintering process. Furthermore, only a limited quantity of pigments can be added to increase opacity.

US-A-5578373, EP-A-875349 and EP-A-467323 disclose heating UHMWPE powder on an endless belt, sintering to a film at 130°C, stretching and rolling.

EP-A-608137 discloses sintering of UHMWPE, whereby hot air heating is used in an orientation step.

EP-A-721021 discloses compression molding of UHMWPE on endless belts at 110-135°C rolled to a film of strength 10-200 ym; the particles are fused together, but also compressed (smoothened). The heating means is not heated air but hot rollers and an infrared preheater

The invention aims at avoiding these disadvantages and achieves this in a process for manufacturing foils for coatings, especially ski and snowboard linings and bearing coatings, from high and ultra-high molecular polyethylene, polypropylene and/or poly(vinylidene difluoride) in that powdered polyethylene, polypropylene and/or poly(vinylidene difluoride), optionally with the addition of colours and/or additives, is spread on a sintering belt circulating in a sintering furnace, operated with heated air thermally sintered and compacted by smoothing rollers to form a foil material with a porosity of 0 to 10%, preferably < 1%.

When compacting in the smoothing works, covering material (e.g. "fleece") can be applied, preferably both from above and below, within the scope of this invention. After compacting the foil is usually fed over cooling rollers and wound onto rolls.

In accordance with a particularly advantageous embodiment of the invention the foil material is compacted up to a porosity < 0.5% and sequently cooled in a water bath or by means of fan cooling to adjust cristallinity.

Above all the process according to the invention offers the advantage of simplification and reduced costs, since long sintering times and high energy input to form blocks are avoided. At the same time the option of even colouring and even incorporation of additives is provided, allowing for example to achieve a greater degree of opacity as compared to the prior art. This is also true with additives incorporated to modify certain running-surface characteristics (sliding properties, wear properties etc.), e.g. those of ski linings. The invention's process allows the homogeneous incorporation of e.g. graphite, carbon black, waxes, teflon powder or molybdenum sulfide, even in high percentages.

According to the process of the present invention very homogeneous structures can be achieved, whereby the crystallinity of the material can be widely varied or controlled by regulating the temperature. Using this process, sintering and setting of a desired percentage of crystallinity, as well as calender-coating of other foils are accomplished in one working cycle.

Preferably, the foil is covered with another foil material, fleece, or the like during the compacting step. Thus, if desired, fleeces for thermal diffusion, coatings, screens, felts, glass mattings, and tissues of glass fibres and plastic mixtures, carpet fabric and carbon materials can be applied to the foil.

Further, together with the polyethylene, polypropylene and/or poly(vinylidene difluoride) additives of colours and pigments like carbon black, graphite and interference pigments, lustrous and luminous substances like glitter, solid lubricants or gliding agents like waxes, graphite, teflon, hexagonal boron nitride, molybdenum sulfide and antimony sulfide, functional additives like bonding agents, plasticizers and wetting agents, opacity intensifiers like cerium oxide, titanium oxide and zirconium oxide, and the like can be spread on the sintering belt.

Instead of polyethylene, polypropylene and poly(vinylidene difluoride) also mixtures of these polymers as well as mixtures with other polymer powders can be employed. Examples are mixtures of polyethylene and polypropylene (PE/PP), polyethylene and poly(vinylidene difluoride) (PE/PVDF) as well as polyethylene and poly(tetrafluoroethylene) (PE/PTFE) in varying mixing ratios depending on the specification profile. For example, the mixing ratio for PE/PP mixtures can vary between 10:90 and 90:10.

Preferably, the process according to the invention produces a foil with a thickness between 0.1 and 5mm.

Polyethylene grades in the high and ultra-high molecular weight range, preferably with molecular weights in the range of 450,000 to 8,000,000, are used. Preferred polypropylenes are isotactic homopolymers and block polymers. The poly(vinylidene difluoride) is preferably a homopolymer. The particle size (grain size) is in the range of 0.1 to 250µm, preferably 100 to 200µm, and in particular about 120µm. Depending on the specific properties these particle sizes are also valid for polypropylene and poly(vinylidene difluoride).

The sintering temperature depends on the polyethylene used, but usually is in the range of 50 to 200°C. The required heated air temperature and the furnace temperature resulting therefrom are somewhat higher depending on the furnace used (see the Examples below). Heated air temperatures of 250-300°C have been found useful.

The temperature of the smoothing rolls is generally in the range of 15 to 160°C, whereby different rolls may have different temperatures. Typically the rolls temperature of the smoothing rolls is in the range of 120 to 150°C, preferably 125 to 140°C. The following cooling roll or cooling rolls usually have a temperature of 5 to 30°C and preferably 10 to 20°C, e.g. 15°C.

The gap between the rolls is adjusted depending on the material thickness of the sintered film to be compacted. In general a process pressure on each side of the film of 5 to 20kN, preferably 8 to 15kN and in particular about 10kN is generated.

The speed of the circulating sintering belt depends on the capacity of the sintering furnace and usually is in the range of 1 to 10 m/min, preferably 2 to 8 m/min and especially 3 to 5 m/min, e.g. typically at about 4 m/min.

The above similarly applies to polypropylene and poly(vinylidene difluoride). Of course, the conditions have to be adapted depending on the properties of the employed polypropylene or poly(vinylidene fluoride).

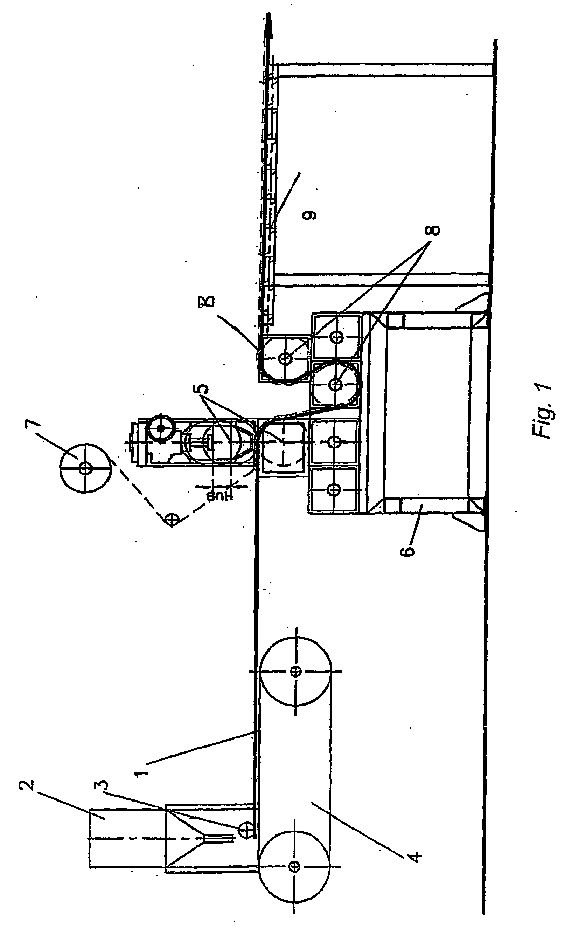

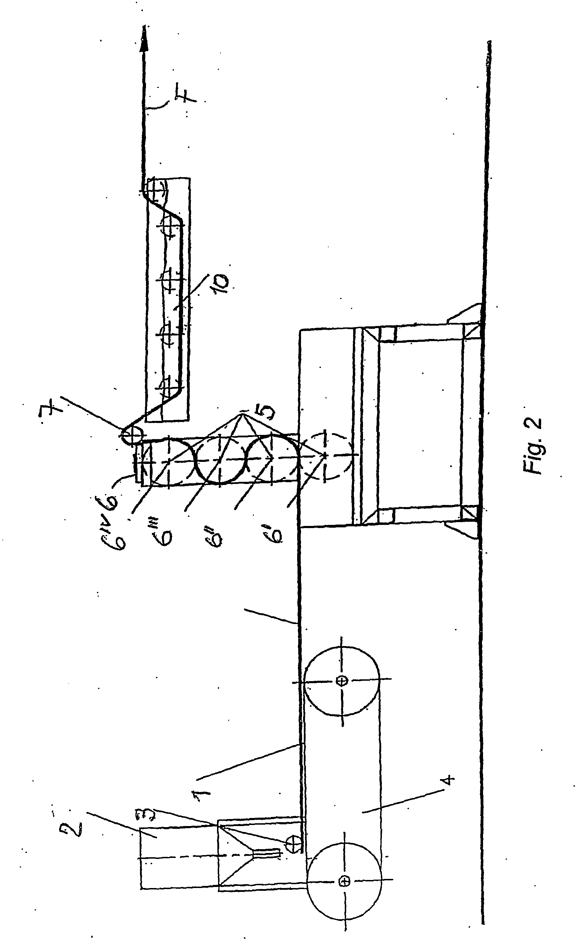

In the following the invention is explained in more detail using working examples and referring to the drawings which show in Fig. 1 and 2 units used in accordance with the invention. The explanations similarly apply to the other above-mentioned polymers and polymer mixtures.

The unit shown in Fig. 1 includes a heated sintering belt (1), which circulates in a sintering furnace (not shown) and is fed with polyethylene raw material by a raw material storage vessel (2) via a spreading roller (3). Circulating air heating (4) is positioned below sintering belt (1). After sintering, the high and/or ultra-high molecular polyethylene passes through heated smoothing rolls (5), which are adjustable positioned on a roll frame (6) on a preset roll gap, while e.g. fleece material is placed on the upper side of sintering belt (1) from a supply roll (7). The sintered foil is then compacted in the smoothing works, before passing under pressure over cooling rolls (8) to a roll belt (9), which conveys the compacted foil to a winding unit (not shown).

Practical working examples of the invention are explained in the following.

### Example 1

Ultra-high molecular polyethylene (UHMW-PE) with a molecular weight of 2,000,000 and a grain size of max. 200µm is placed on the sintering belt (1) at a heated air temperature of 290°C. The powder is placed on the sintering belt (1) by a spreading roller (3) from a powder-supply container (2).

The sintering belt (1) moves at a speed of about 3 to 5 m/min. The sintered, porous strip (3) on the sintering belt is about 4 mm thick and has a porosity of about 50%. The material is compacted to a residual porosity of less than 1% in the smoothing-compacting rollers (5) at a roller temperature of 140°C and a roller pressure of 10 kN per strip side. The total thickness of foil strip B, which is drawn off by the cooling rollers (8) amounts to about 1 mm. The foil is transparent.

### Example 2

The ultra-high molecular polyethylene of Example 1 is homogeneously mixed with 0.5 wt.% interference pigment, 0.05 wt.% carbon black and 2 wt.% polyethylene wax (based on the weight of the employed ultra-high molecular polyethylene) and is placed on the sintering belt (1), sintered and compacted under the same conditions as in Example 1. The obtained foil is uniformally coloured.

### Example 3

High molecular polythelyne (HMW-PE) with a molecular weight of 500,000 and a grain size of max. 170µm is placed on the sintering belt at a heated air temperature of 270°C. The powder is placed on the sintering belt (1) by a spreading roller (3) from a powder-supply container (2).

The sintering belt (1) moves at a speed of 3 to 5 m/min. The sintered, porous strip (3) on the sintering belt (1) is about 2mm thick and has a porosity of about 50%. The material is compacted to a residual porosity of less than 1% in the smoothing-compacting rollers (5) at a roller temperature of 135°C and a roller pressure of 12kN per strip side. The total thickness of foil strip B, which is drawn off by the colling rollers (8), amounts to about 1mm. The foil is transparent.

A thermo-diffusion process can be applied in a subsequent step to design patterns, lettering, illustrations, etc. in colour.

### Example 4

Polypropylene homopolymer (PP) with a grain size of max. 250µm is placed on the sintering belt (1) at a heated air temperature of 290°C. The powder is placed on the sintering belt (1) by a spreading roller (3) from a powder-supply container (2). The sintering belt (1) moves at a speed of 3 to 5m/min. The sintered, porous strip (3) on the sintering belt is about 2mm thick and has a porosity of about 50%. The material is compacted to a residual porosity of about 1% in the smoothing-compacting rollers (5) at a roller temperature of 150°C and a roller pressure of 11kN per strip side. The foil strip, which is drawn off by the cooling rollers (8), can be cut to sheets or wound up.

### Example 5

Poly(vinylidene difluoride) homopolymer (PVDF)with a grain size of max. 10µm is placed on the sintered belt (1) at a heated air temperature of 250°. The powder is placed on the sintering belt (1) by a spreading roller (3) from a powder-supply container (2).

The sintering belt (1) moves at a speed of 4 to 6m/min. The sintered, porous strip (3) on the sintering belt is about 1mm thick and has a porosity of about 50%. The material is compacted to a residual porosity of about 25% in the smoothing-compacting rollers (5) at a roller temperature of 130°C and a roller pressure of 12kN per strip side. The total thickness of foil strip B, which is drawn off by the cooling rollers (8), amounts to about 0.5mm. The foil is white and mechanically well set.

In a subsequent step the foil can be post-compacted whereby it becomes transparent. A thermo-diffusion process can be applied in this step to design patterns, lettering, illustrations, etc. in colour.

In the embodiment shown in Fig. 2, the unit similarly has a heated sintering belt (1) which circulates in a sintering furnace (not shown) and is fed with the polyethylene raw material from a raw material storage vessel (2) via a spreading roller (3). Circulating air heating (4) is positioned below sintering belt (1). After sintering at a material temperature of e.g. 170°C to a porosity of e.g. 50%, the high-molecular or ultra-high molecular polyethylene strip passes through the heated smoothing rollers (5), which are positioned vertically in a roller frame (6), adjustable to a predetermined roller gap. The lower two rollers, 6^{I} and 6^{II}, have a temperature of about 125°C. The material is compacted to a porosity of < 1% by a suitable gap setting between the lower rollers 6^{I} and 6^{II}. The material is smoothed and given a glossy surface finish by a slight compacting by suitable gap settings between rollers 6^{II}, 6^{III} and 6^{IV} (temperature approximately 110°C). The strip is then passed over a deflector roll (7) and quickly cooled in a water-bath or by means of fan cooling(10) having a temperature of 5 to 25°C or ambient temperature; this rapid cooling produces a finely crystalline structure and a better transparency. The sintered foil F is then conveyed to a winding unit (not shown).

The porosity of the foils prepared according to the invention is determined by measuring the weight of a sample in air and by measuring the weight (lift) of the free floating sample immersed in water. It holds densityₛₐₘₚₗₑ[g/cm³] = Mₐᵢᵣ[g]/(Mₐᵢᵣ[g]+ M_{water}[g]). If the polyethylene has for example a density of 0.93g/cm³ and the density of water is set at 1g/cm³, then it follows that porosity[%] = 100 - densityₛₐₘₚₗₑ[g/cm³] x 107.53. As porosity value the average of 3 samples is given.

## Claims

1. A process for manufacturing foils for coatings, especially ski and snowboard linings and bearing coatings, from high and ultra-high molecular polyethylene, polypropylene and/or poly(vinylidene difluoride) **characterized in that** powdered polyethylene, polypropylene and/or poly(vinylidene difluoride), optionally with the addition of colours and/or additives, is spread on a sintering belt circulating in a sintering furnace operated with heated air, thermally sintered, and then compacted by smoothing rollers to form a foil material with a porosity of 0 to 10%, preferably < 1%.

2. A process according to claim 1 in which the foil material is compacted to a porosity of < 0.5% and following the compacting step cooled in a water-bath or by fan cooling for adjusting the crystallinity.

3. A process according to claim 1 or 2 in which the foil is coated with another foil material or fleece during the compacting step.

4. A process according to anyone of claims 1 to 3 in which poly(tetrafluoroethylene) is added to the polyethylene, polypropylene and/or poly(vinylidene difluoride).

5. A process according to anyone of claims 1 to 4 in which fleeces for thermal diffusion, coatings, screens, felts, glass mattings, tissues of glass fibre and plastics blends, carpet tissue and/or carbon materials are applied to the foil.

6. A process according to anyone of claims 1 to 5 in which together with the polyethylene, polypropylene and/or poly(vinylidene difluoride) dyes and pigments like carbon black, graphite' and interference pigments, lustrous and luminous substances like glitter, solid lubricants or gliding agents like waxes, graphite, teflon, hexagonal boron nitride, molybdenum sulfide and antimony sulfide, bonding agents, plasticizers, wetting agents, and opacity intensifiers like cerium oxide, titanium oxide and zirconium oxide are spread on the sintering belt

7. A process according to anyone of claims 1 to 6 in which by the smoothing rollers a foil is produced with a thickness of between 0.1 and 5 mm.

8. A process according to anyone of claims 1 to 7 in which polyethylene with a molecular weight in the range of 450,000 to 8,000,000 is used.

9. A process according to anyone of claims 1 to 8 in which the polyethylene has a particle size in the range of 0.1 to 250µm.

10. A process according to any of claims 1 to 9 in which the sintering temperature is in the range of 50 to 200°C.

## Patentansprüche

1. Verfahren zur Herstellung von Folien für Beschichtungen, im Besonderen für Ski- und Snowboardbeläge und Trägerschichten, aus hoch- oder ultrahochmolekularem Polyethylen, Polypropylen und/oder Poly(vinylidendifluorid), **dadurch gekennzeichnet, dass** pulverisiertes Polyethylen, Polypropylen und/oder Poly(vinylidendifluorid), wahlweise mit dem Zusatz von Farben und/oder Zusatzstoffen, auf einem Sinterband, das in einem mit Heißluft betriebenen Hochofen zirkuliert, verteilt wird, thermisch gesintert wird und dann von Glättrollen zu einem Folienmaterial mit einer Porosität von 0 % bis 10 %, vorzugsweise von < 1 %, verdichtet wird.

2. Verfahren nach Anspruch 1, bei dem das Folienmaterial zu einer Porosität von < 0,5 % verdichtet wird und an den Verdichtungsschritt anschließend in einem Wasserbad oder durch Gebläsekühlung zur Anpassung der Kristallinität abgekühlt wird.

3. Verfahren nach Anspruch 1 oder 2, bei dem die Folie während des Verdichtungsschrittes mit einem weiteren Folienmaterial oder Vlies beschichtet wird.

4. Verfahren nach einem der Ansprüche 1 bis 3, bei dem Poly(tetrafluorethylen) dem Polyethylen, Polypropylen und/oder dem Poly(vinylidendifluorid) zugesetzt wird.

5. Verfahren nach einem der Ansprüche 1 bis 4, bei dem Vliese für Thermodiffusion, Beschichtungen, Folien, Filze, Glasmatten, Stoffe aus Glasfasern und Kunststoffmischungen, Teppichgewebe und/oder Kohlenstoffmaterialien auf die Folie aufgetragen werden.

6. Verfahren nach einem der Ansprüche 1 bis 5, bei dem zusammen mit dem Polyethylen, Polypropylen und/oder Poly(vinylidendifluorid) Färbemittel und Pigmente wie Kohlenstoff schwarz, Graphit und Interferenzpigmente, glänzende oder glitzernde Substanzen wie Glitter, Feststoffschmiermittel oder Gleitmittel wie Wachse, Graphite, Teflon, hexagonales Bornitrid, Molybdänsulfid und Antimonsulfid, Bindemittel, Weichmacher, Feuchthaltemittel und Deckkraftverstärker wie Ceroxid, Titaniumoxid und Zirkonoxid auf dem Sinterband verteilt werden.

7. Verfahren nach einem der Ansprüche 1 bis 6, bei dem von den Glättrollen eine Folie mit einer Dicke von zwischen 0,1 mm und 5 mm hergestellt wird.

8. Verfahren nach einem der Ansprüche 1 bis 7, bei dem Polyethylen mit einem Molekulargewicht im Bereich von 450 000 bis 8 000 000 verwendet wird.

9. Verfahren nach einem der Ansprüche 1 bis 8, bei dem das Polyethylen eine Partikelgröße im Bereich von 0,1 µm bis 250 µm hat.

10. Verfahren nach einem der Ansprüche 1 bis 9, bei dem die Sintertemperatur im Bereich von 50°C bis 200°C liegt.

## Revendications

1. Procédé de fabrication de feuilles pour des revêtements, en particulier pour des couches de revêtement de skis et planches de snowboard et des revêtements de glissement, à partir de polyéthylène, polypropylène et/ou difluorure de polyvinylidène haute densité et ultra haute densité, **caractérisé en ce que** le polyéthylène, polypropylène et/ou difluorure de polyvinylidène pulvérulent, le cas échéant avec l'addition de couleurs et/ou d'additifs, est étalé sur une courroie de frittage circulant dans un four de frittage fonctionnant avec de l'air chauffé, thermiquement fritté et puis compacté par des rouleaux de lissage pour former un matériau en feuille ayant une porosité de 0 à 10 %, de préférence < 1 %.

2. Procédé selon la revendication 1, dans lequel le matériau en feuille est compacté à une porosité < 0,5 % et, à la suite de l'étape de compactage, refroidi dans un bain d'eau ou par refroidissement au ventilateur pour ajuster la cristallinité.

3. Procédé selon la revendication 1 ou 2, dans lequel la feuille est enduite d'un autre matériau en feuille ou moleton au cours de l'étape de compactage.

4. Procédé selon l'une quelconque des revendications 1 à 3, dans lequel le poly(tétrafluoroéthylène) est ajouté au polyéthylène, polypropylène et/ou difluorure de polyvinylidène.

5. Procédé selon l'une quelconque des revendications 1 à 4, dans lequel des moletons pour la diffusion thermique, des revêtements, des écrans, des feutres, des matages en verre, des tissus de fibres de verre et des mélanges plastiques, des cordages à tapis et/ou des matières carbonées, sont appliqués à la feuille.

6. Procédé selon l'une quelconque des revendications 1 à 5, dans lequel, conjointement avec le polyéthylène, polypropylène et/ou difluorure de polyvinylidène, des colorants et pigments comme le noir de carbone, le graphite et des pigments d'interférence, des substances brillantes et lumineuses comme le scintillant, des lubrifiants solides ou des agents de glissement comme les cires, le graphite, le téflon, le nitrure de bore hexagonal, le sulfure de molybdène et le sulfure d'antimoine, des agents de liaison, des plastifiants, des agents mouillants, et des renforçateurs d'opacité comme l'oxyde de cérium, l'oxyde de titane et l'oxyde de zirconium sont étalés sur la courroie de frittage.

7. Procédé selon l'une quelconque des revendications 1 à 6, dans lequel, grâce aux rouleaux lissants, on produit une feuille ayant une épaisseur comprise entre 0,1 et 5 mm.

8. Procédé selon l'une quelconque des revendications 1 à 7, dans lequel on utilise un polyéthylène ayant un poids moléculaire dans la plage de 450 000 à 8 000 000.

9. Procédé selon l'une quelconque des revendications 1 à 8, dans lequel le polyéthylène a une taille de particules dans la plage de 0,1 à 250 µm.

10. Procédé selon l'une quelconque des revendications 1 à 9, dans lequel la température de frittage est dans la plage de 50 à 200°C.
